**Europäisches Patentamt**

**European Patent Office**

**Office européen des brevets**

(19)

(11) Numéro de publication: **0 034 978**

**B1**

(12) **FASCICULE DE BREVET EUROPEEN**

(45) Date de publication du fascicule du brevet: **13.04.83**

(51) Int. Cl.³: **B 32 B 15/01, G 04 B 37/00**

(21) Numéro de dépôt: **81400237.4**

(22) Date de dépôt: **17.02.81**

(54) **Complexe stratifié résistant à la corrosion, comprenant un substrat métallique et une couche externe en un matériau différent, notamment en une matière noble.**

(30) Priorité: **20.02.80 FR 8003699**

(43) Date de publication de la demande:
**02.09.81 Bulletin 81/35**

(45) Mention de la délivrance du brevet:
**13.04.83 Bulletin 83/15**

(84) Etats contractants désignés:
**BE CH DE GB IT LI NL**

(56) Documents cités:
**FR - A - 2 099 554**
**FR - A - 2 291 289**

(73) Titulaire: **S.T. DUPONT Société anonyme dite:**
**Tour Maine-Montparnasse 33, avenue du Maine**
**F-75755 Paris Cédex 15 (FR)**

(72) Inventeur: **Royer, Michel**
**La Combe**
**F-74330 La Balme de Sillingy (FR)**

(74) Mandataire: **Brot, Philippe et al,**
**CABINET BROT 83, rue d'Amsterdam**
**F-75008 Paris (FR)**

Courier Press, Leamington Spa, England.

**0 034 978**

# Complexe stratifié résistant à la corrosion, comprenant un substrat métallique et une couche externe en un matériau différent, notamment en une matière noble.

L'invention concerne un complexe stratifié comprenant un substrat métallique et une couche externe en un matériau différent, notammeñt en un matériau noble, tel qu'un métal précieux (or, platine etc....), de la laque de Chine ou similaire. L'invention concerne plus particulièrement un complexe stratifié de ce type dont le substrat est apte à résister à la corrosion dans des conditions difficiles et prolongées.

De telles conditions d'utilisation sont celles, en particulier, des boîtiers de montres-bracelets, qui demeurent en contact direct avec la peau pendant de longues périodes et subissent par conséquent l'action corrosive de la sueur. Il est donc d'usage, pour réaliser des fonds de boîtiers de montres, même lorsqu'il s'agit de montres de luxe, d'utiliser de l'acier dit "inoxydable", parce qu'il est rendu tel, dans les conditions normales d'utilisation, par une passivation de sa surface extérieure, c'est-à-dire par la formation sur cette surface d'un film imperméable d'oxydes, qui assurent sa protection.

Il est bien entendu possible de réaliser des fonds de boîtiers de montres en or, puisque ce métal résiste parfaitement aux types usuels d'attaque et de corrosion. Mais le coût de tels boîtiers ne permet pas d'en équiper n'importe quel type de montre, même de luxe, mais seulement les montres de très grande valeur.

On a naturellement essayé de plaquer avec de l'or des fonds de boîtiers de montres, mais tous les essais effectués dans ce sens se sont révélés infructueux.

En effet, lorsque l'on procède au dépôt par voie électrolytique ou autre d'une mince couche de métal sur un autre métal ou alliage, cette couche présente toujours, quel que soit le soin apporté à la réaliser, des micro-pores ou des micro-fissures, et il en est de même lorsque l'on recouvre un métal d'une couche de vernis ou analogue.

Si le support n'est pas inoxydable, les micro-pores et micro-fissures provoquent des oxydations locales qui, à la longue, vont désolidariser la couche externe du substrat.

Si on utilise en support en alliage d'acier inoxydable, on rencontre alors le problème de la tenue du film de passivation en présence des constituants de la sueur, notamment des chlorures et des acides organiques.

Le film de passivation, qui est constitué d'oxydes, ne peut se former qu'en milieu oxygéné et nécessite donc une large aération pour se reconstituer en cas d'attaque. Or, si par exemple des traces de chlorures se déposent dans les micro-pores et micro-fissures, la surface de l'acier inoxydable en contact avec ces chlorures est insuffisamment aérée pour que se reconstitue le film de passivation, de sorte que l'acier se corrode localement, avec pour conséquence à la longue, le décollement de la couche externe.

Il a été aussi proposé de remplacer l'acier inoxydable classique par des aciers spéciaux. Mais on s'est heurté aux mêmes phénomènes d'attaques locales dans les zones des micro-pores et des micro-fissures de la couche externe.

La présente invention vise à proposer un complexe stratifié dans lequel le substrat métallique est capable de résister à toute attaque par le sueur humaine, même dans les zones de micro-pores et de micro-fissures de la couche externe.

Conformément à l'invention, ce substrat métallique est constitué par un alliage de nickel comportant, en % en poids, un minimum 45% de nickel, de 7% de chrome et de 7% de molybdène, les additifs éventuellement présents représentant au plus 15%.

De préférence, la quantité de chrome sera à peu près égale à la quantité de molybdène et représentera environ un quart de la quantité de nickel. De préférence encore, le substrat comprendra, en % en poids, environ 54% de nickel, 16% de chrome et 16% de molybdène.

Il est d'autant plus surprenant que le complexe conforme à l'invention résiste parfaitement à une exposition prolongée à l'action de la sueur humaine, que des essais systématiques, effectués préalablement par la Demanderesse avec des complexes comprenant des substrats en des matériaux réputés pour leur résistance à la corrosion dans des conditions usuelles, avaient montré que ces substrats se corrodaient très rapidement au contact de la sueur.

Ces essais avaient été conduits en mettant des échantillons en présence d'une atmosphère d'air à 40°C, saturée d'un mélange de composés chimiques aptes à reproduire les effets de la sueur humaine, et en notant la durée au bout de laquelle apparaîssait, sur ces échantillons, soit une corrosion du substrat, soit en décollement de la couche externe.

La composition du mélange était celle recommandée par l'institut allemand Bundes Anstalt für Materialprüfung, à savoir, en grammes par litre de solution aqueuse:

— chlorure de sodium: 20,0 g,

— chlorure d'ammonium: 17,5 g,

— urée: 5,0 g,

**0 034 978**

— acide acétique: 2,5 g,

— acide pyravique: 2,5 g,

— acide butyrique: 5,0 g,

— acide lactique: 15,0 g,

— hydroxyde de sodium: quantité nécessaire pour amener le pH à 4,7.

Ce mélange était répandu à l'état de fin brouillard, au moyen d'un pulvérisateur, sur toute la surface des échantillons testés et ceux-ci étaient alors suspendus au-dessus du même mélange, dans un récipient fermé de façon étanche, placé dans une étuve à 40°C.

Les échantillons testés avaient la forme de pastilles d'un diamètre de deux centimètres et d'une épaisseur de deux à trois millimètres. Ils étaient revêtus soit d'une couche d'or de 20 microns d'épaisseur, soit de laque de Chine.

Comme indiqué ci-dessus, les essais avaient été menés avec des échantillons de matériaux connus et réputés pour leur résistance à la corrosion dans les milieux les plus variés tels que ceux que l'on rencontre dans l'industrie chimique, la conserverie ou le domaine des prothèses humaines ou animales. Les résultats de ces essais sont rassemblés dans le Tableau suivant, dans lequel:

— la colonne 1 donne le nom et la composition de l'alliage testé;

— la colonne 2 indique le nombre de jours après lequel des traces de corrosion ont été constatées sur les échantillons plaqués or;

— la colonne 3 indique le nombre de jours après lequel un décollement de laque a été constaté sur les échantillons laqués.

TABLEAU

| 1 | 2 | 3 |
|---|---|---|
| Laiton (Cu : 60,0% Zn : 40,0%) | 1 | 4 |
| "A" Nickel* (Ni : 99,5% Divers : 0,5%) | 2 | 10 |
| Inconel 600* (Ni : 76,0% Cr : 16,0:% Fe : 7,0% Divers : 1,0%) | 2 | 13 |
| Acier inoxydable 18—10 (Fe : 78,5% Cr : 18,0% Ni : 10,0% Divers : 3,5%) | 2 | 15 |
| Acier inoxydable 18—10—3 ( Fe : 75,5% Cr : 18,0% Ni : 10,0% Mo : 3,0% Divers : 3,5 %) | 3 | 12 |
| "K" Monel* (Ni : 66,0% Cu : 29,0% Al : 3,0% Divers : 2,0%) | 4 | 15 |
| Hastelloy B* (Ni : 62,0% Mo : 28,0 % Divers : 10,0%) | 0,5 | 40 |
| * Marque déposée. | | |

3

**0 034 978**

A titre comparatif, la Demanderesse a testé, dans les mêmes conditions d'atmosphère, des pièces nues (c'est-à-dire sans revêtement) de ces mêmes alliages et le tableau suivant donne le classement de ces alliages par ordre décroissant de degré de corrosion:

| Après 5 heures | Après 8 heures | Après 24 heures |
|---|---|---|
| 1 Laiton | 1 Laiton | 1 Laiton |
| 2 Monel | 2 Inox 18—10 | 2 Inox 18—10 |
| 3 Inox 18—10 | 3 Monel | 3 Monel |
| 4 Nickel | 4 Nickel | 4 Hastelloy B |
| 5 Hastelloy B | 5 Inconel | 5 Nickel |
| 6 Inconel / Inox 18—10—3 | 6 Hastelloy B | 6 Inoxy 18—10—3 |
| | 7 Inox 18—10—3 | 7 Inconel |

Les tableaux ci-dessus font ressortir l'aspect décevant des essais effectués et le caractère aléatoire des résultats obtenus. En effet, on note tout d'abord d'importantes différences dans la tenue de ces alliages, suivant qu'ils sont utilisés seuls ou comme substrats.

Dans le domaine de l'utilisation des alliages de nickel comme substrats, on notera ensuite que l'Inconel 600 avec 76% de nickel et 16% de chrome, se révèle moins bon que le "K" Monel, avec 66% de nickel et 29% de cuivre, et que l'Hastelloy B, avec 62% de nickel et 28% de molybdène: un tel résultat apparaît surprenant, lorsque l'on connaît le rôle protecteur du chrome contre la corrosion.

On peut faire la même remarque en ce qui concerne les aciers inoxydables: l'adjonction de 3% de molybdène, pourtant très significative en ce qui concerne la résistance à la corrosion par les acides organiques, ne modifie pas sensiblement les résultats des tests.

Si l'on se réfère maintenant aux utilisations des alliages testés, il n'est pas possible non plus d'établir entre les résultats obtenus une correlation susceptible d'orienter la recherche d'un substrat satisfaisant.

On constate, par exemple, que des alliages comme l'"Inconel", le "A" nickel et le "K" Monel, recommandés pour leur tenue aux acides organiques et pour leur tenue aux chlorures, ne résistent pas à la corrosion lorsqu'ils sont utilisés comme substrats dans les conditions définies plus haut.

On constate également que les aciers inoxydables utilisés dans le domaine des prothèses humaines et animales ne résistant pas comme substrat dans un milieu reproduisant les caractéristiques physico-chimiques de la sueur humaine.

Il est donc particulièrement surprenant que le substrat métallique du complexe conforme à l'invention demeure insensible aux effets de la sueur humaine, lorsque ce complexe demeure en contact pendant de longues périodes avec la peau humaine, alors que la résistance à la corrosion de ce substrat, dans des conditions usuelles d'utilisation, est en tout point comparable à celle des alliages mentionnés dans le Tableau ci-dessus.

La Demanderesse a ainsi testé avec succès deux types de substrats entrant dans le cadre de la présente invention, en les soumettant aux conditions d'essai rapportées ci-dessus. Ces deux substrats sont des alliages de nickel commercialisés sous la marque déposée Hastelloy C.

La composition du premier substrat était la suivante, en % en poids:

— Ni : 54,0%,

— Mo : 15,5%,

— Cr : 15,5%,

— Divers : 15%,

tandis que celle du deuxième substrat était:

— Ni : 62,0%,

— Mo : 16,0%,

4

— Cr : 16,0%,

— Divers :  6,0%,

Sur des pastilles de ces substrats revêtus d'une couche d'or d'une épaisseur de 20 microns, aucune trace d'oxydation n'est apparue après plus de 140 jours d'essai, sans interruption.

Des essais poursuivis plus longuement à partir du même substrat recouvert cette fois-ci de laque de Chine ont permis de constater qu'aucune trace de décollement de la couche de laque n'est apparue après une durée de 500 jours.

Des essais complémentaires effectués par la Demanderesse lui ont permis d'établir qui la teneur en nickel d'un alliage apte à former le substrat d'un complexe conforme à l'invention doit représenter au moins 45% en poids de ce alliage, tandis que les teneurs en chrome et en molybdène doivent être respectivement égales à au moins 7% en poids. En outre, l'ensemble des autres constituants de l'alliage, tels que tungstène, fer, cobalt, manganèse, silicium, ne doit pas dépasser, toujours en % en poids, environ 15% du poids total du substrat.

## Revendications

1. Complexe stratifié résistant à la corrosion comprenant un substrat métallique et une couche externe en un matériau noble, caractérisé en ce que ledit substrat est constitué par un alliage comprenant, en % en poids, au moins 45% de nickel, au moins 7% de chrome et au moins 7% de molybdène, l'ensemble des autres constituants du substrat représentant au plus 15% en poids de l'alliage.

2. Complexe stratifié selon la revendication 1, caractérisé en ce que la teneur en chrome est sensiblement égale à celle du molybdène et représente au plus 25% de celle du nickel.

3. Complexe stratifié selon la revendication 1, caractérisé en ce qu'il comprend, en % en poids, environ 54% de nickel, 16% de chrome et 16% de molybdène.

4. Application d'un complexe stratifié selon l'une des revendications 1 à 3 à la réalisation d'objets appelés à être en contact pendant de longues durées avec la peau humaine, notamment des fonds de boîtiers de montres.

## Claims

1. A stratified corrosion-resistant complex comprising a metal substrate and an external layer of a noble material, characterized in that said substrate is formed by an alloy comprising, in % by weight, at least 40% of nickel, at least 7% of chromium and at least 7% of molybdenum, the whole of the other constituents of the substrate representing at most 16% by weight of the alloy.

2. The stratified complex according to claim 1, characterized in that the chromium content is substantially equal to that of molybdenum and represents at most 25% of that of the nickel.

3. The stratified complex as claimed in claim 1, characterized in that it comprises, in % by weight, about 50% nickel, 16% chromium, and 16% molybdenum.

4. The application of a stratified complex according to one of claims 1 to 3 to the construction of objects required to be in contact for long periods of time with the human skin, particularly the backs of watch cases.

## Patentansprüche

1. Korrosionsbeständiger Verbundwerkstoff, enthaltend ein metallisches Substrat und eine Außenschicht aus einem Edelmetall, dadurch gekennzeichnet, daß das Substrat aus einer Legierung besteht, die (in Gewichtsprozent) mindestens 45% Nickel, mindestens 7% Chrom und mindestens 7% Molybdän enthält, wobei alle anderen Bestandteile des Substrats höchstens 15 Gewichtsprozent der Legierung ausmachen.

2. Verbundwerkstoff nach Anspruch 1, dadurch gekennzeichnet, daß die Menge des Chroms praktisch gleich der des Molybdäns ist und höchstens 25% der Menge, des Nickels ausmacht.

3. Verbundwerkstoff nach Anspruch 1, dadurch gekennzeichnet, daß er (in Gewichtsprozent) etwa 54% Nickel, 16% Chrom und 16% Molybdän enthält.

4. Verwendung eines Verbundwerkstoffs nach einem der Ansprüche 1 bis 3 zur Herstellung von Gegenständen, die über einen längeren Zeitraum mit der menschlichen Haut in Berührung stehen sollen, insbesondere von Bodenplatten für Uhrengehäuse.